# EUROPEAN PATENT APPLICATION

(11) **EP 3 831 201 A1**
(43) Date of publication of application: **09.06.2021**
(21) Application number: 20211181.1
(22) Date of filing: 02.12.2020
(51) Int. Cl.: A01K 39/02

(54) **DRINKING TROUGH FOR ANIMALS, IN PARTICULAR SMALL ANIMALS**

(30) Priority: 06.12.2019 IT 201900023193
(71) Applicant: Lorini, Dante, 26013 Crema (CR) (IT)
(72) Inventor: Lorini, Dante, 26013 Crema (CR) (IT)
(74) Representative: Stucovitz, Alessandro

(57) **Abstract**

Drinking trough for animals, particularly small animals, comprising:
- a tank (10) for storing a liquid supply;
- a drinking tray (20) arranged underneath the tank (10) in a vertical direction (Z-Z);
- connection means (30) for establishing a fluid connection between the top tank and the bottom tray (20) and means for dispensing the liquid towards the drinking tray (20);
- means (40) for illuminating the drinking tray (20).

## Description

The present invention relates to a drinking trough for animals, in particular small animals.

It is known in the technical sector relating to the transportation of small animals and/or animals which have just been born, such as chicks, that these are kept confined inside a transportation system which is normally air-conditioned to ensure a minimum degree of comfort for the animals.

It is also known, however, that the duration of the journey - by air or by road - may last for several days, as occurs, for example, in the case of chicks bred for reproduction purposes, these being transported to particular well-defined zones (France, United Kingdom, USA) which are highly specialized. It may therefore happen that the chicks remain confined and abandoned inside the transportation system - even though there is air-conditioning - without any water or light, in conditions where they are exposed to great stress and the risk of death, both during the journey and after being cooped up for several days at the destination location, with negative effects, also in the long term, on their growth performance.

In addition to the purely economic factor, it is also necessary to take into account the ethical aspect of safeguarding and ensuring the well-being of the animals, which nowadays is increasingly required in more evolved societies.

US 9,961,885, US 3,487,847, US 5,099,798 and FR 2,450,055 describe drinking troughs which are designed to be installed in open spaces or in farms and which, because of their structure and their installation method and/or the fact that they require pressurised systems, pumping means or electric control and power supply systems, are not suitable for transportation of small-size animals which, as mentioned above, is generally performed in crates which are placed in freight containers or holds without any supervision during transportation. The preamble of Claim 1 is in particular based on US 9,961,885.

US 9,961,885 describes a trailer for transporting large-size animals, which has a pressurised-water tank connected to electric power supply means of the vehicle which pulls the trailer and a plurality of drinking trays which are separate from the tank and supplied by means of pipes with pressurised water. This solution is also unsuitable for the transportation of small-size animals, for the same reasons as those mentioned above.

The technical problem which is posed, therefore, is that of providing a device which allows a sufficient liquid supply to be maintained and dispensed in order to satisfy the water and drinking requirements of the animals during transportation.

In connection with this problem it is also required that this device should have small dimensions, be easy and low-cost to produce and assemble and be able to be installed easily in any normal means for transporting and/or containing the animals, and should also favour the access of the animals to the drinking zone.

These results are obtained according to the present invention by a drinking trough for dispensing a liquid according to the characteristic features of Claim 1 and by a containing box for transporting animals according to Claim 18.

Further details may be obtained from the following description of a nonlimiting example of embodiment of the subject of the present invention provided with reference to the attached drawings in which:
Figure 1: shows an exploded perspective view of a drinking trough according to the present invention;
Figure 2: shows a perspective view of the front part of the drinking trough according to Fig. 1 in the assembled condition;
Figure 3: shows a perspective view of the rear part of the drinking trough according to Fig. 1 in the assembled condition;
Figures 4a,4b: show partially cross-sectioned perspective views of the drinking trough according to the present invention;
Figure 5: is a reproduction of an example of embodiment of the drinking trough according to the present invention;
Figure 6: shows a front view of the drinking trough according to Fig. 5 in dark transportation conditions with illumination of the drinking tray;
Figure 7: shows a vertically sectioned view of a variation of embodiment of the drinking trough according to Figures 1-4;
Figure 8: shows an exploded perspective view of a second embodiment of the drinking trough according to the present invention;
Figure 9: shows a perspective view of the drinking trough according to Fig. 8 in the assembled condition;
Figure 10: shows an exploded perspective view of a third embodiment of the drinking trough according to the present invention; and
Figure 11: shows a perspective view of the drinking trough according to Fig. 10 in the assembled condition.

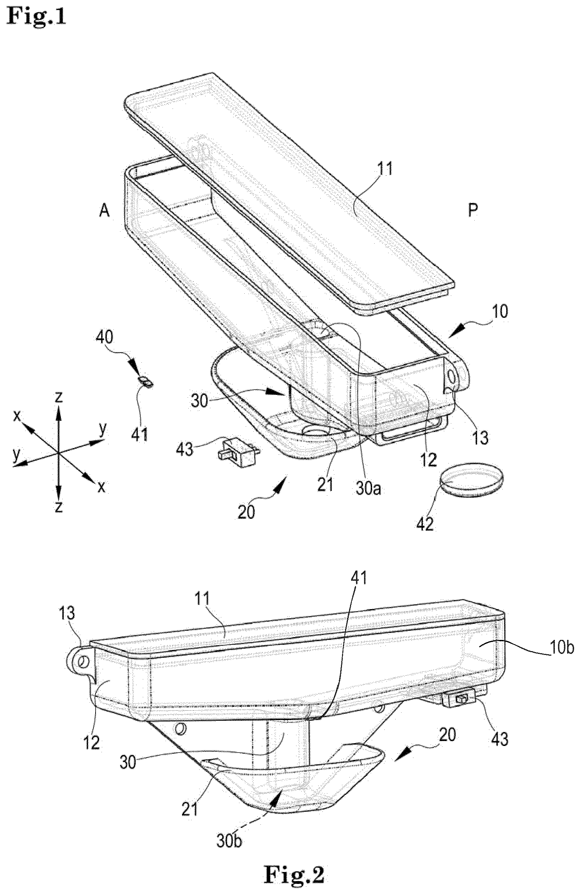

As shown in Fig. 1 and assuming solely for easier description and without a limiting meaning a set of three reference axes, i.e. in a longitudinal direction X-X, corresponding to a lengthwise dimension, transverse direction Y-Y, corresponding to a depthwise dimension, and vertical direction Z-Z, orthogonal to the preceding two directions, as well as a front part A corresponding to the access part of the drinking trough and a rear part P, opposite to the front part, an example of a drinking trough according to the invention comprises:
- a tank 10 for storing a liquid supply;
- a drinking tray 20 arranged underneath the tank 10;
- connection means 30 for establishing a fluid connection between the top tank and the bottom tray, via liquid dispensing means;
- illumination means 40, in particular arranged so as to illuminate the drinking tray 20.

As shown in Fig. 2, once the drinking trough has been assembled, the tank 10, the tray 20, the connection means 30 and the illumination means 40 form a single independent unit which may be installed on a wall of a transportation means and/or on a box containing the small-size animals and which allows the dispensing of a sufficient liquid supply in order to satisfy the water requirement and allow the animals to drink while being transported. As will become clearer below, the drinking trough therefore does not require pressurised water, pumping means or connections to external electrical power supplies, nor supervision and maintenance during transportation; owing to illumination of the drinking trough during transportation, the small-size animals housed in the transportation means or in the containing box are guided to the drinking tray and do not remain in the dark, therefore ensuring better living conditions for the animals with less stress due to transportation. Preferably, the illumination means (for example at least one white LED) are positioned above the drinking tray 20, preferably inserted inside a special protective recess, in particular on the outer side of a front wall 10b or bottom wall 10d of the storage tank 10.

The tank 10 preferably extends in a direction parallel to the longitudinal axis X-X, namely horizontal axis during use, and has dimensions such as to define a suitable volume for containing a quantity of liquid proportional to the expected duration of the journey; by way of example, it has been established in tests that 100 cm³ may be sufficient to meet the drinking needs of about twenty animals for a period of 2-3 days.

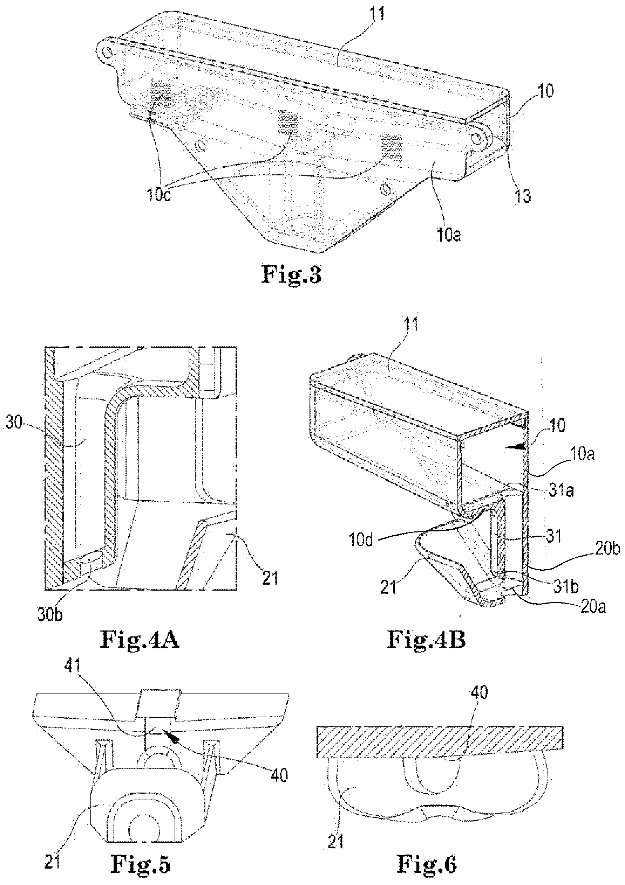

As shown in Fig. 3, a flat rear wall 10a, 20b of the drinking trough extends along a vertical/longitudinal plane, allowing it to be mounted on a support surface, such as the wall of a transportation means or an animal containing box.

In greater detail and as shown in Figs. 1-4b, the storage tank 10 of a preferred example of embodiment has a rear wall 10a, extending along a vertical/longitudinal plane, a front wall 10b, generally parallel to the rear wall 10a and situated opposite it in the transverse direction X-X, and a bottom wall 10d.

The rear wall 10a extends downwards beyond the bottom wall so as to form a plate which rigidly connects the tray 20 to the tank 10. In particular, the extension of the rear wall 10a forms, along its bottom part in the vertical direction, a rear wall 20b of the tray 20.

The tank may be closed in a fluid-tight manner by a lid 11 sealed onto the body 12 of the tank.

Preferably, the drinking trough and in particular the tank has means for mounting on a support surface, preferably comprising rings 13 designed to receive means for fastening to the walls of the transportation means and/or to the boxes containing the animals; according to preferred embodiments, the rear wall 10a (Fig. 3) of the tank may be provided with adhesive material 10c for direct mounting on the support surfaces.

The drinking tray 20 is in turn suitably designed in terms of dimensions and has a perimetral retaining edge 21 for preventing liquid from escaping following shaking during transportation.

According to a preferred embodiment the connection means 30 for connecting together tank 10 and drinking tray 20 comprise a tubular duct 31 with a first top end 31a connected to the tank 10 and an opposite, free, bottom end 31b arranged inside the tray 20.

It is envisaged in particular that the bottom end 31b of the duct is arranged at a suitable distance in the vertical direction Z-Z from the bottom 20a of the tray in order to allow the inflow of air.

In this way a communicating vessels system of the self-levelling type is formed since the downward flow of the liquid from the tank 10 to the tray 20 will only occur only for as long as the outlet mouth 30b of the bottom end 31b of the duct remains free, allowing air to return to the tank and therefore the dispensing action, while this is instead prevented when the liquid inside the tray 20 reaches a predefined level and covers the bottom end of the duct 31.

Advantageously, the duct 31 may be arranged with its bottom outlet mouth 30b arranged with a suitable inclination - for example about 20° - with respect to the vertical direction Z-Z, so as to favour said return air flow from the bottom level to the top tank.

As can be seen in Figs. 1, 2, 4a, 4b, the tubular duct 30 has in particular its top end 31a with open mouth passing through the bottom wall 10d of the storage tank 10, preferably in a substantially central position along the longitudinal extension of the tank 10. Therefore, the water supply contained in the internal volume of the tank may be easily conveyed to the connection duct 30 for dispensing to the tray, without the need for pressure systems or pumping systems.

The bottom wall 10d of the storage tank 10 containing the water supply may have its inner surface inclined from the top downwards and from the outside in the longitudinal direction towards the top mouth 31a of the connection duct 31, in order to facilitate the supply of the liquid to the connection duct 31 and from here to the means for dispensing into the tray.

As shown, it is preferably envisaged that the duct 30 is rigidly connected to said connection plate formed by the rear wall 20b of the drinking trough, although it is also possible for the tank to be fixed spaced from the rear plate. In the example shown in Figs. 1-4, the duct 31 is in particular partly incorporated in said rear wall 20b.

The illumination means 40 comprise preferably at least one white LED which is incorporated in the structure of the drinking trough, in particular in the front surface 10b or bottom surface 10d of the tank, and used as a small light source for attracting the attention and facilitating access to the water source. The luminous power required is very small since the area destined for the animals is small, i.e. about 0.2 m², and the zone to be effectively lit is limited to the zone of the drinking tray 20 (Fig. 6); basically, a high-efficiency white LED with a maximum of 2 mA is adequate for use, so that a 3-Volt battery 42 with a capacity of 100 mA/h may ensure continuous lighting for up to five days.

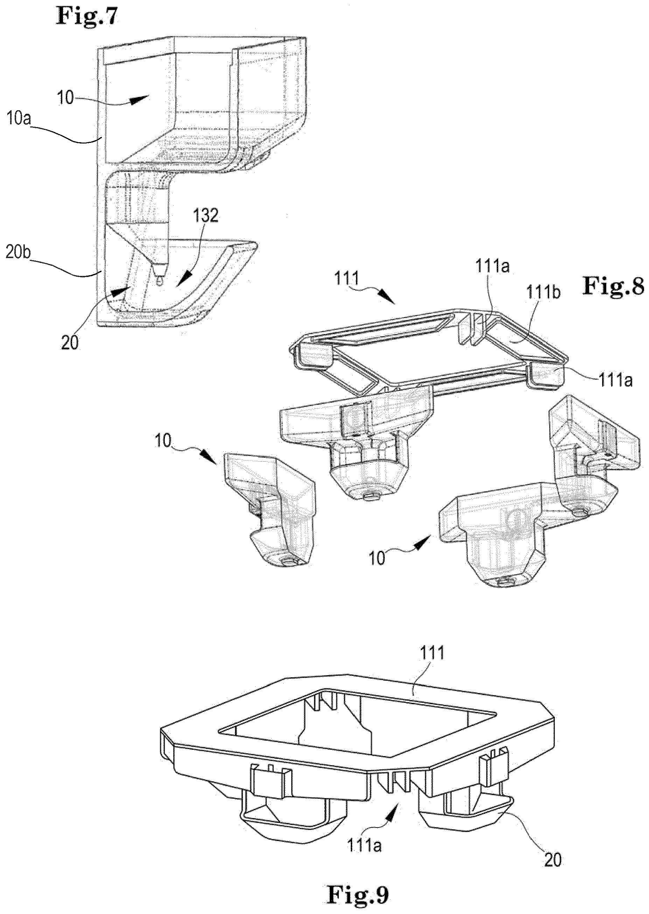

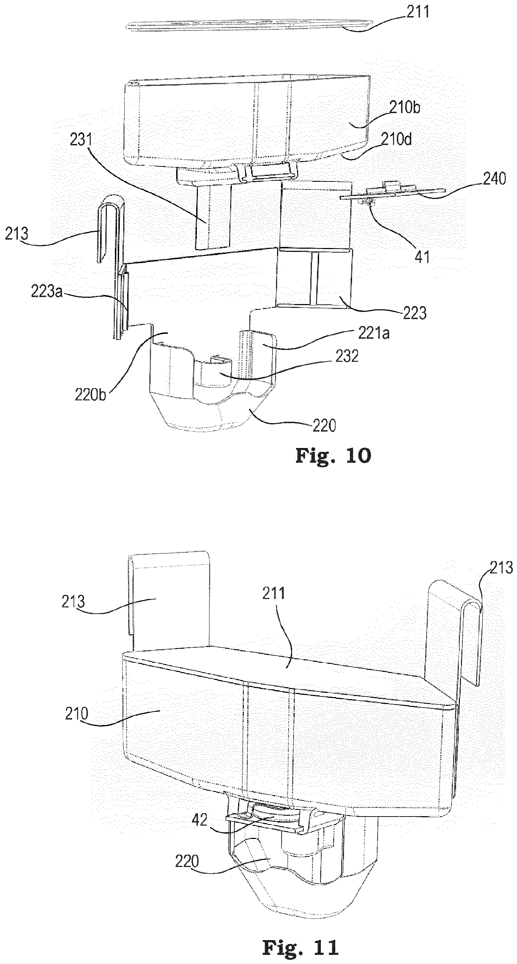

As shown, the battery 42 may be housed inside a respective seat also formed in a wall of the container, in particular in the bottom wall 10d, preferably in a lateral or overlying position with respect to the LEDs 41 (Fig. 2,11), or in the front wall 10b, preferably in a central position substantially overlying the LEDs 41 (Figs. 5,8).

Lighting of the LEDs may be performed by means of a microswitch 43 or, alternatively, using a simple tab which once removed will activate the contact closing an electric power supply circuit.

The drinking trough device could also be installed by means of interlocking engagement with the crate housing the animals.

The device could also form an integral part of the crate, should the latter be reusable.

It is envisaged that the liquid to be dispensed is preferably water, but it is possible to use physiological solutions or water containing pharmacological additives, such as supplements or the like.

It is also conceivable that the tank may be filled rapidly with the prechosen liquid, preferably by means of a dedicated metering device, which after use may be removed.

Alternatively, the storage tank could be provided already prefilled with the desired fluid and with an opening cap to be opened/removed at the time of initial use.

It is also envisaged that the drinking trough device or at least the tank, the connection means and the tray may be integrally made as a single body and/or of biodegradable and compostable material which may be easily disposed of once the battery powering the lighting system has been extracted.

As shown in Fig. 6, according to a variation of embodiment, the dispensing of the fluid may be performed by means of dispensing means arranged at the free bottom end of the duct 31 and comprising a spout 132 made of plastic material for drip feeding, in particular provided with a small transverse slit at the free end part. The spout may be kept closed by the elasticity of the material and configured to be opened to allow drinking by the animal following a light pressure exerted with its beak/snout.

As shown, also in the case of drip feeding of the liquid, a drinking tray 20 is provided below the dispensing point, said tray having the function of containing and collecting any fluid which falls as a result of vibrations or shaking, so that the fluid is not lost or soils the floor, but may be used by the animals.

Dispensing of the liquid may be obtained by means of the aforementioned dispensing means with self-levelling tray (Figs. 1-4) having drip feeders for example of the deformable plastic (Fig. 6) or mechanical valve type, but also capillary dispensing means (for example of the tube or wick type), depending on the specific logistical requirements (form and duration of transportation, type and size of the animals).

The dispensing means in the form of mechanically operated dispensing valves may for example comprise a simple valve kept closed by a small spring and having an outwardly projecting lug which are operated by the animal by means of contact of their beak/snout with the lug or spout which causes a small flow of fluid.

In the case of tanks which extend greatly in the longitudinal direction and, therefore, have very low hydrostatic pressures, it is possible to use dispensing means which act by means of capillarity so as to ensure that there is always available a droplet of liquid on the end part of the spout, without the need for pressure systems or pumps.

It is envisaged in this configuration that the tube or wick which acts by means of capillarity is surrounded by a surface made of (or treated superficially with) a non-wettable (water-repellent) material and has a negative inclination so as to limit the drip as far as possible and keep it stable until it is sucked by the animal.

Figs. 8 and 9 show a further embodiment of the drinking trough according to the invention which involves in this case the formation of a multiple drinking trough 100 comprising a plurality of tanks 10 positioned in a preferred arrangement, for example distributed at an angular distance from each other with respect to a longitudinal/transverse plane and each forming single independent drinking units with the respective connection means, tray and illumination means.

In the preferred example shown, the four containers 10 are arranged along the sides of a quadrilateral, a form which is advantageous in the case of transportation of animals, particularly, but not exclusively chicks, inside conventional containing boxes, since these are divided up into four volumes. It is however possible to envisage the multiple drinking trough being realized using different polygonal configurations, with tanks arranged along respective sides of the polygon.

As shown, it is envisaged preferably that the multiple tanks 10 should be closed at the top by a single lid 111 extending in the form of a quadrilateral (or other polygon) and provided on its bottom surface with seats or reliefs 111b for engagement with or performing closing of a respective tank 10, so as to ensure fastening together and sealing of the top tank 10.

The lid is preferably provided with hooks 111a which are designed for interlocking engagement on at least one support wall so as to ensure fastening for example to said crates containing the animals.

In the case of multiple drinking troughs it is possible to combine the battery and the light source using optical fibres so that the light of a single centralized LED is directed towards the compartments of the crate intended for the animals.

According to a preferred mode of implementation, an example of which is shown in Figs. 10 and 11, the drinking trough comprises a rear wall 220b which, once assembly has been performed, rigidly connects an independent tank 210 with a tray 220 and allows the installation, in the example by means of interlocking engagement, on a crate containing small-size animals for transportation thereof.

In greater detail, means 223,223a for stable engagement with the tank 210 are attached to the rear wall 220b.

In a preferred embodiment, a pair of lateral flanges 223 each extend from a respective vertical side of the rear wall 220b, preferably towards the front wall, and are inclined with respect to the plane X-Z of the rear wall. Each lateral flange 223 may comprise a structure for interlocking engagement with a corresponding side wall of the tank 210, in the example shown comprising a raised rib 223a designed to be inserted inside a corresponding groove (not shown) in the side wall of the tank 210.

According to a further preferred aspect, the means for mounting on a support surface comprise hooks 213, for example in the form of an inverted U, which are integral with the rear wall and designed for engagement on a top edge of the support surface, such as the top edges of a box containing the chicks.

In the example shown, the hooks 213 extend upwards in the vertical direction from a respective lateral flange 223. In the case of flanges arranged inclined with respect to the rear wall 220b, the mounting means 213 extending from the flanges allow fixing in a corner of the containing box. As shown in Figs. 10 and 11, the connection duct 231 may be formed as one piece with the independent tank 210, or may be fixed thereto during assembly, and a collar 232 is provided so as to extend transversely from the front surface of the rear wall 220b, inside which the duct may be vertically inserted; the collar 232 therefore acts as a means for rigidly connecting the duct 231 to the said rear wall 220b.

In the preferred example shown, a lighting unit 240 comprises the battery 42 and the illumination LEDs and may be inserted as a single unit inside a corresponding seat in the bottom wall of the tank 210, in particular in a central position, situated above the tray 220.

As shown in Figs. 5-11, the drinking trough may have vertical side walls 221a extending in the transverse direction Y-Y from the rear wall 220b between the perimetral edge of the tray 120,220 and the tank 210.

As shown in Fig. 11, once assembled, the drinking trough forms a single unit which may be easily mounted on an animal containing box for transporting the animals, dispensing the necessary amount of liquid for sustaining the animals during transportation. Fig. 11 shows the tank closed by a single lid 211, but it is clear that this embodiment may also be closed by a multiple lid (Fig. 9) so as to form a multiple drinking trough. In addition, the separate tank 210 is particularly suitable for embodiments in which a dedicated metering device is to be used, said device being able to be removed after use.

It is therefore clear how a drinking trough for animals according to the invention may be produced at a low cost and installed at the place of use in a very simple manner.

In addition, it is able to ensure optimum survival conditions owing to a liquid dispensing system which is maintained during the entire period of transportation, as well as better living conditions for the animals with a reduction in the transportation stress, owing in particular to the illumination of the drinking trough during transportation.

Advantageously, preferred drinking troughs according to the invention do not have, nor do they require, pressurized-liquid and/or pumping systems and/or a connection to an external electric power supply in order to dispense the liquid supply during transportation of the animals.

Although described in connection with a number of embodiments and a number of preferred examples of implementation of the invention, it is understood that the scope of protection of the present patent is determined solely by the claims below.

## Claims

1. Drinking trough for animals, in particular small animals, **characterized in that** it comprises:
- a tank (10) for storing a liquid supply;
- a drinking tray (20) arranged underneath the tank (10) in a vertical direction (Z-Z);
- connection means (30) for establishing a fluid connection between the top tank and the bottom tray (20) and means for dispensing the liquid towards the drinking tray (20);
- means (40) for illuminating the drinking tray (20);
**characterized in that**, in an assembled state of the drinking trough, the tank (10;210), the tray (20;220), the connection means (30;230) and the illumination means (40;240) form a single independent unit which is configured to be stably installed on a wall of a transportation means and/or on a containing box for transportation of the animals, so as to cause dispensing of the liquid supply during transportation such as to allow drinking and satisfy the water requirement of the animals.

2. Drinking trough according to Claim 1, **characterized in that** the tank (10) extends along a longitudinal lengthwise direction (X-X) which is horizontal during use.

3. Drinking trough according to one of the preceding claims, **characterized in that** the tank is closed in a fluid-tight manner by a lid (11;111) sealed onto a body (12) of the tank.

4. Drinking trough according to one of the preceding claims, **characterized in that** a rear wall (10a,20b;220b) of the drinking trough extends in a longitudinal/vertical plane and/or rigidly connects the tank (10;210) and the tray (20;220).

5. Drinking trough according to Claim 4, **characterized in that** the rear wall (10a,20b,220b) forms in a bottom part thereof a rear wall (20b) of the tray; wherein, optionally, the rear wall (10a,20b,220b) forms in a top part thereof a rear wall (10a) of the tank or a plate provided with means (223,223a) for the stable engagement, during assembly, with a separate tank (210).

6. Drinking trough according to any one of the preceding claims, **characterized in that** it has mounting means for mounting on a support surface of a transportation means and/or of a box for containing the animals, preferably comprising: rings (13) designed to receive fastening means for fastening to a wall of a transportation means and/or to a box containing the animals; and/or adhesive material on the rear wall (10a,220b) of the drinking trough, in particular of the tank (10), for direct mounting on the support surface; and/or hooking means (213), preferably comprising hooks in the form of an inverted U which are integral with the rear wall (220b) and each designed for engagement on a top edge of a support surface.

7. Drinking trough according to one of the preceding claims, **characterized in that** the drinking tray (20; 220) has a perimetral edge (21) for retaining the liquid.

8. Drinking trough according to any one of the preceding claims, **characterized in that** the connection means (30, 230) for connecting the tank (10;210) and the drinking tray (20;220) comprise a tubular duct (31;231) with a first top end (30a) connected to the tank (10;210) and an opposite bottom free end (30b) arranged inside the tray (20;220).

9. Drinking trough according to the preceding claim, **characterized in that** the free bottom end (31b) of the duct (30) is arranged inclined with respect to the vertical direction (Z-Z); and/or the top end (31a) of the tubular duct (31;231) has an open mouth passing through a bottom wall (10d) of the storage tank (10;210), preferably in a substantially central position along the longitudinal extension of the tank (10;210); and/or the duct (31;231) is rigidly connected to the rear wall (20b;220b) of the drinking trough.

10. Drinking trough according to one of the preceding claims, **characterized in that**:
the tank contains a liquid to be dispensed comprising water, physiological solutions or water containing pharmacological additives and/or supplements; and/or
**in that** it comprises a dedicated metered dispensing device containing the liquid to be dispensed for filling the tank (10), or **in that** the tank (10) is prefilled with the liquid to be dispensed, and **in that** it has an opening cap to be opened/removed at the time of use.

11. Drinking trough according to any one of the preceding claims, **characterized in that** at least the tank, the connection means and the tray and preferably the dispensing means are made as a single body and/or of biodegradable and/or compostable material.

12. Drinking trough according to one of the preceding claims, wherein the dispensing means comprise an open bottom end (30b) of a connecting duct (31) of the connection means (30), arranged at a distance from a bottom (20a) of the tray (20) so as to form a communicating vessels system of the self-levelling type between tank and tray.

13. Drinking trough according to one of Claims 1-11, wherein the dispensing means comprise dispensing means arranged at the free bottom end of the duct (31) and comprising a spout (132) made of plastic material for drip feeding, in particular of the deformation or mechanical valve type; or capillary dispensing means, preferably of the tube or wick type;
wherein optionally:
- the dispensing means comprise a spout (132) made of deformable material, in particular having a small transverse incision in a free end part, the spout being kept closed by the elasticity of the material and being configured to be opened for drinking by the animal by means of a light pressure exerted with their beak/snout; or
- the dispensing means are in the form of a mechanically operated dispensing valve and comprise a valve which is kept closed by a small spring and/or with an outwardly projecting lug which can be operated by means of contact of the animal's beak/snout with the lug or spout which causes a small liquid flow; or
- the capillary dispensing means comprise a tube or a wick which operates by means of a capillary effect and is preferably surrounded by a surface made of or treated superficially with a water-repellent material and/or arranged with a negative inclination so as to limit the drip as far as possible and keep it stable until it is sucked by the animal.

14. Drinking trough according to any one of the preceding claims, **characterized in that** the illumination means (40;240) comprise a white LED (41) connected to or incorporated within the structure of the drinking trough, a power supply battery (43) and means (42) for switching the LED on/off; and/or **in that** the illumination means (40;240) are arranged on the outer side of a front wall (10b) or bottom wall (10d) of the storage tank (10;210).

15. Drinking trough according to the preceding claim, **characterized in that** the means (42) for switching the LED on/off comprise a microswitch (43) or a tongue for activating a closing contact of an electric power supply circuit.

16. Multiple drinking trough, **characterized in that** it comprises a plurality of drinking units each formed by a drinking trough according to one of the preceding claims.

17. Multiple drinking trough according to the preceding claim, **characterized in that** the drinking units are arranged in a polygonal layout and/or **in that** it comprises a polygonal lid (111) for closing the single tanks (12) of the single units (10), the lid (111) being preferably provided with fastening elements (111a) for fastening to support surfaces of the boxes housing the animals.

18. Containing box for transporting small animals, comprising at least one drinking trough according to one of the preceding claims installed on a wall of the box so as to allow drinking during transportation of one or more animals housed inside the internal containing volume of the box.
